# EUROPEAN PATENT SPECIFICATION

(11) **EP 0 542 333 B1**
(45) Date of publication and mention of the grant of the patent: **05.03.1997**
(21) Application number: 92203235.4
(22) Date of filing: 21.10.1992
(51) Int. Cl.: H04B 1/04

(54) **Transmitter input stage with adaptive frequency deviation control**
Sendereingangsstufe mit adaptiver Frequenzhubsteuerung
Etage d'entrée d'émetteur avec commande adaptative de la déviation de fréquence

(30) Priority: 15.11.1991 NL 9101908
(43) Date of publication of application: 19.05.1993
(73) Proprietor: ERICSSON RADIO SYSTEMS B.V., 7814 VA Emmen (NL)
(72) Inventor: Vrijkorte, Marcel Johannes Gerhardus, NL-7812 VH Emmen (NL); Eikenbroek, Johannes Wilhelmus Theodorus, NL-7827 LA Emmen (NL)
(74) Representative: van der Arend, Adrianus G.A., Ir.

(56) References cited:
- EP-A- 0 367 077
- WO-A-90/08438
- US-A- 3 886 457
- US-A- 4 363 131
- PATENT ABSTRACTS OF JAPAN vol. 8, no. 49 (E-230)(1486) 6 March 1984 & JP-A-58 204 636

## Description

The invention relates to an input stage of a transmitter, comprising a combining circuit having a plurality of inputs for receiving various input signals having various highest frequencies with significant amplitudes, the combining circuit combining the input signals into a modulation signal which is supplied to an output of the combining circuit which is intended to be connected to a frequency modulation stage of the transmitter in order to arrange for the generation and transmission of a transmission signal having a bandwidth which is essentially smaller than, or equal to, a maximum permitted bandwidth.

The bandwidth of the transmitter signal depends, in the case of frequency modulation, on the highest frequency of the modulation signal and on a frequency deviation which depends on the amplitude of the modulation signal. The bandwidth of the transmitter signal is approximately equal to twice the sum of the highest frequency of the modulation signal plus the frequency deviation.

A transmitter input stage of the abovementioned type is known from transmitter CW 8032, manufactured by applicant from 1984. With this prior art input stage two input signals are combined. One input signal has a low frequency range to 400 Hz and the second input signal has a high frequency range from 800 Hz. Both input signals are amplified (or attenuated) individually by fixed factors and then summed and low pass frequency limited to 2600 Hz to eventually provide a modulation signal for a modulator. The waveform of the modulation signal and amplitudes of high frequencies components thereof and therefore the bandwidth will differ for the three possible cases in which both input signals are present or just one input signal is present. As explained below, eventually this requires limitation of the fixed gain factor of an output stage and therefore limits the receiving sensitivity and/or the reception range for the transmission signal.

A transmitter input stage of the above mentioned type is known also from "IEEE Transactions On Vehicular Technology", VOL. VT 29, NO.2, May 1980, pages 260, 265, 266, Chapter V "Experimental Simulation Test System" (fig. 7 and 8) by Takeshi Hattori and Shigeaki Ogose. This article discloses a transmitter input stage as experimental test system. This test system comprises two adders, each receiving a rectangular input signal and a sinusoidal input signal, the sinusoidal input signal having a higher frequency and different phases for both adders, wherein each adder provides a different modulation signal by addition of the associated input signals. Each modulation signal is supplied to its associated transmitter. The amplitude of the sinusoidal input signal is a parameter of the experiment, while by variation of said amplitude there is no adaptation of gain factors of the system. Therefore this prior art system, if used to transmit in practice after all, operates with fixed amplification factors and therefore, as explained below, makes no optimum use of the available bandwidth and therefore limits the receiving sensitivity and/or the reception range for the transmission signal.

In the case of the known transmitter input stage the combining circuit consists simply of a junction point or of an amplifier which has a plurality of inputs for the various input signals and a fixed gain factor. In this way the maximum occurring bandwidth of the transmitter signal is determined by the input signal or the group of input signals having the highest frequency with significant amplitude and/or the largest amplitude. In the case of individual input signals or groups of input signals whose highest frequencies and/or amplitudes are lower and/or smaller, the associated bandwidths of the transmitter signal will then be smaller. The smaller bandwidth and, consequently, a non-optimum distribution of the transmitter energy over the frequency spectrum, given the same gain of a main stage of the transmitter, limits the receiving sensitivity and/or the reception range for the transmission signal.

The object of the invention is to overcome the drawback of the known transmitter input stage.

This object with regard to the transmitter input stage of the type described in the preamble is achieved according to the invention in that the combining circuit amplifies each of the input signals and/or a combined group of input signals, depending on their presence and on their highest frequency, in such a way that the bandwidth of the transmission signal is increased towards the maximum permitted bandwidth.

Suitable choice of the amplification of each received individual input signal and/or each group of received input signals thus enables the modulation signal to be adapted in such a way that it is always possible to achieve and to use the maximum permitted bandwidth of the transmitter signal. In this way the receiving sensitivity and/or the reception range for the transmitter signal is increased. Because the frequencies of the various input signals in the modulation signal do not change in this case, adaptive control of the frequency deviation of the transmitter signal is essentially achieved.

For each individual input signal received, or for each group of input signals received, a separate amplifier having a gain factor can be used, or a common amplifier having an adjustable gain factor can be used, which gain factor is determined by which of the input signals or which of the group of input signals is being received.

It should be noted that where the claims and the description refer to amplification, this term may be replaced within the scope of the invention by attenuation.

These and other properties and advantages of the invention will become apparent upon reading the following explanation of embodiments of the transmitter input stage according to the invention with reference to the appended drawings, in which:
Figure 1 shows a block diagram of a transmitter having an input stage according to the invention;
Figure 2 shows another embodiment of an input stage according to the invention; and
Figure 3 shows a block diagram of another embodiment of an input stage according to the invention for use in a paging system.

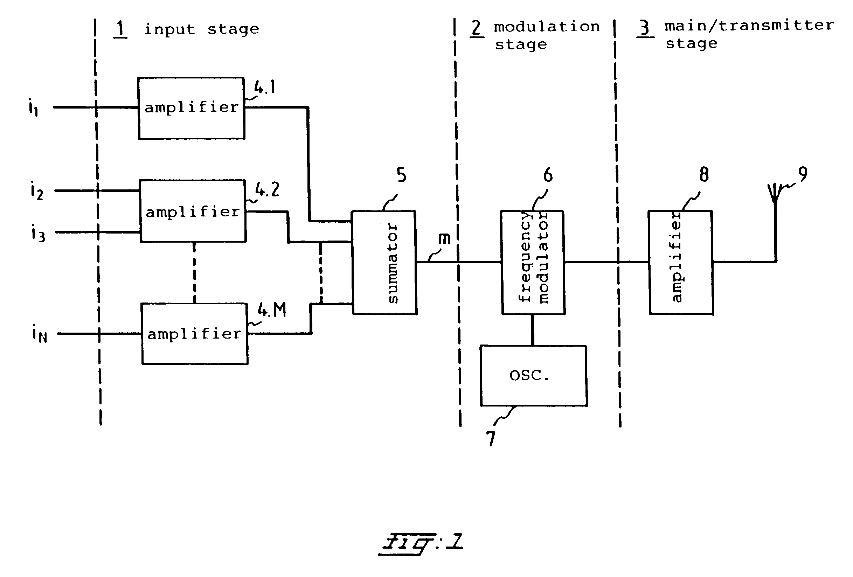

Figure 1 shows a block diagram of a transmitter comprising, in series, an input stage 1, a modulation stage 2 and a main/transmitter stage 3.

The input stage 1 has a plurality of amplifiers 4.1 to 4.M inclusive, each of which receives one or more input signals i₁ to i_{N} inclusive and supplies an output signal to a summator 5. One output of the summator 5 supplies a modulation signal m and is connected to a modulation input of a frequency modulator 6 of the modulation stage 2. Another input of the modulator 6 receives a carrier wave signal from an oscillator 7. The output signal of the modulator 6 is amplified by an amplifier 8 of the main/transmitter stage 3 and after amplification is emitted by an antenna 9.

In the modulation stage 2, as shown in Figure 1, the frequency modulator comprises, for example, a phase modulator and an integrator. The modulation stage may however, more commonly, also comprise a directly modulatable oscillator, for example a voltage controlled oscillator (VCO).

Depending on the construction of the amplifiers 4.1 to 4.M inclusive and of the modulator 6, the summator 5 may comprise a summing amplifier or, in the simplest embodiment, a junction point. The bandwidth of the transmission signal emitted by the antenna 9 is approximately equal to twice the sum of the highest frequency of the modulation signal plus the frequency deviation (or frequency swing). The greater the frequency deviation is, the greater the amplitude of the modulation signal is.

The amplifiers 4.1 to 4.M inclusive are set with gain factors (which, once set, are intended to remain unchanged) in such a way that the greater the amplitude of an output signal of an amplifier 4.i is, the lower a highest frequency with significant amplitude of the output signal of the amplifier 4.i is. In this way, the frequency deviation of the transmission signal will be greater for signals i having lower highest frequencies. Consequently, adaptive control of the frequency deviation is achieved for the purpose of increasing the bandwidth of the transmission signal within a maximum permitted bandwidth. Thus the receiving sensitivity and/or the reception range for the transmitter signal is increased.

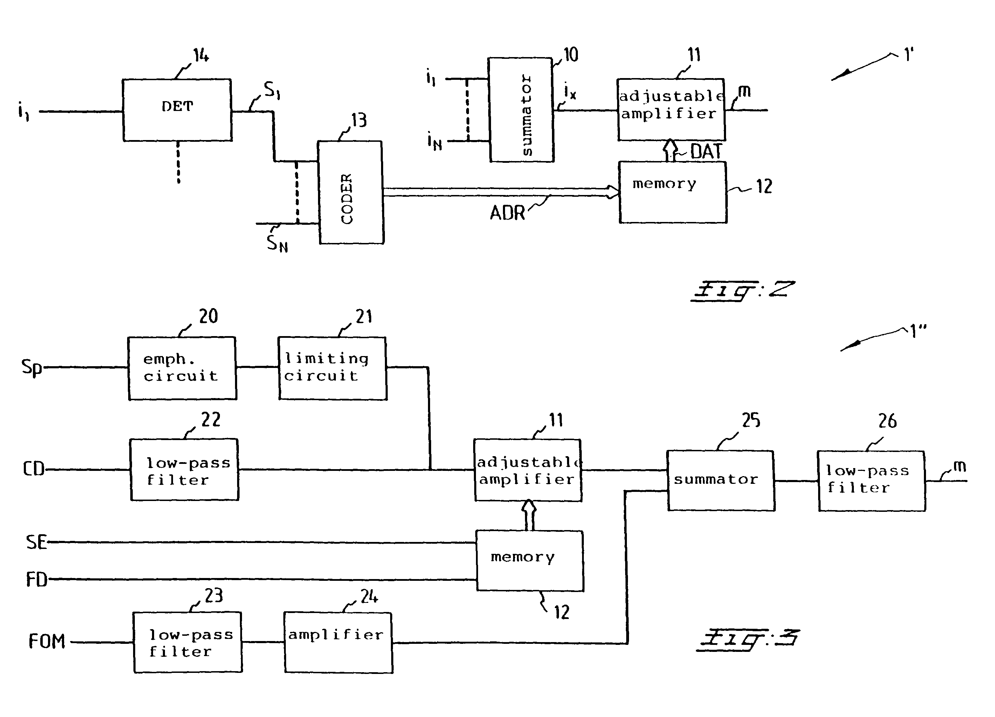

Figure 2 shows a block diagram of another embodiment of an input stage 1' according to the invention, which can be used instead of the input stage of Figure 1.

The input stage 1' of Figure 2 comprises a summator 10 which receives, continuously or alternating in random sequence, a single input signal or a group of input signals combined from the input signals i₁ to i_{N} inclusive, and which, depending on the circuits supplying these input signals, may comprise a summing amplifier or even a simple junction point. An output of the summator 10 supplies an input signal iₓ to an input of an amplifier 11 having an adjustable gain factor. Control inputs of the adjustable amplifier 11 receive, from a memory 12, a data signal DAT for the purpose of adjusting the gain factor of the amplifier 11. An output of the adjustable amplifier 11 supplies the modulation signal m.

The memory 12 is addressed by an address ADR which is supplied by a coder 13 which receives selection signals S₁ to S_{N} inclusive, each of which indicates whether the input signals, or groups thereof, i₁ to i_{N} inclusive are supplied to the summator 10. If the signals S₁ to S_{N} inclusive are not available in the transmitter, they may easily be generated by using a detector, such as the detector 14 of the input signal i₁, which receives the input signal in question, or the group of input signals in question, and which detects whether the amplitude of the signal(s) is or is not above a certain value.

In the memory 12, at locations indicated by the address ADR, values of gain factors are stored associated with each individual received input signal, or each group of received input signals, i₁ to i_{N} inclusive. Consequently, apart from a possible amplifier of the summator 10, the input stage 1' of Figure 2 need only comprise a single amplifier, namely the adjustable amplifier 11. The gain factors stored in the memory 12 are easily changed (although this is not shown), for example by replacing the memory by another memory if it is a read-only memory, or by a user from a workstation if the memory 12 is connected to a control system (not shown) of the transmitter.

Figure 3 shows a block diagram of an input stage 1" for a transmitter of a paging system. Three of the abovementioned input signals i₁ to i_{N} inclusive received by the input stage 1" are a speech signal SP, a binary code signal CD and a binary frequency offset modulation signal FOM. The code signal CD may contain an identification number assigned to a portable receiver unit of the system. The signal FOM is used in systems having more than one transmitter and comprises a signal whose frequency is approximately twice the bit frequency of the code signal CD, which for different transmitters is differently shifted in phase and is superimposed on the code signal CD. The signal FOM therefore does not exist without a signal CD being supplied to the input stage 1".

Two selection signals of the abovementioned selection signals S₁ to S_{N} inclusive received by the input stage 1" are a speech enabling signal SE and an FOM detection signal FD. If the signal SE is high, this indicates that a speech signal SP is being received. If both SE and FD are low, this indicates that only a code signal CD is being received. If the signal FD is high, this indicates that a code signal CD is being received onto which the signal FOM must be superimposed.

The signals SP, CD, FOM, SE and FD are available in systems which can be obtained from the applicant.

The speech signal SP is first fed through a circuit 20 which amplifies higher frequencies more strongly than lower frequencies, or which attenuates lower frequencies more strongly than higher frequencies ("emphasise circuit"). The output signal of the circuit 20 is fed through a limiting circuit 21 in order to limit its amplitude. The output signal of the limiting circuit 21 is supplied to an input of the adjustable amplifier 11.

The adjustable amplifier 11 at the same time receives, via a low-pass filter 22, the code signal CD.

The signal FOM is supplied, via a low-pass filter 23 and an amplifier 24, to an input of a summator 25 which receives, at another input, the output signal of the adjustable amplifier 11. The output signal of the summator 25 is supplied to a low-pass filter 26 which, at one output, supplies the modulation signal m for the modulator 6 of Figure 1.

If the selection signal SE is high, that is to say if a speech signal SP is being received, the address supplied to the memory 12 points to a memory location having a first value for the gain factor of an adjustable amplifier 11. If the selection signal SE is low and the selection signal FD is low, that is to say if only a code signal CD is being received, the address supplied to the memory 12 points to a location having a second value for the gain factor. If the selection signal SE is low and the signal FD is high, that is to say if a code signal CD is being received onto which an FOM signal must be superimposed, the address supplied to the memory 12 points to a location having a third value for the gain factor. The memory 12 therefore need contain only three locations having three values for the gain factor. The memory need therefore comprise only three registers, each having an enabling input for the purpose of receiving an enabling signal which, for example by means of a combinatorial circuit, is obtained from the signals SE and FD. For the same bit time of the code signal CD the second value will be greater than the third value.

The low-pass filter 26 is preferably a 4th order Chebyshev filter having a cut-off frequency of 3 kHz.

The low-pass filters 22 and 23 are preferably 10th order Bessel filters, which are almost optimally suited for the code signal CD and the FOM signal, respectively, and which have a smaller bandwidth than that of the filter 26. The cut-off frequency of the filter 22 is equal to the bit time of a code signal CD having the shortest bit time, and the cut-off frequency of the filter 23 is equal to twice the cut-off frequency of the filter 22. A filter of this type, in response to pulses having the bit time of the code signal CD or the FOM signal, produces as the output signal a signal having the shape of a raised cosine pulse. To the extent that more successive bits are high or low, the peak or the trough, respectively, becomes wider. By shaping pulses in this way, frequency components of a bit which are not of essential importance to information transfer are removed. Consequently, higher harmonics of the fundamental bit frequency disappear, which means that, if angle modulation is used, it is possible to operate with a greater frequency deviation than if the pulses were not shaped in the way described.

In practice within a paging system different receivers may be used or messages may be sent with code signals CD having different bit frequencies. Bit frequencies of 480 bit/s - 4800 bit/s may be used, corresponding to a sine wave fundamental frequency of 240 Hz - 2400 Hz in the case of alternate reception of logical ones and zeros. It is then expedient for the memory 12 to have more than three storage locations and a correspondingly larger address range, which makes it possible to choose code signals CD having different bit frequencies from different gain factors of the amplifier 11, and thus to choose different frequency deviations of the transmitter signal to be emitted by the antenna 9, for the purpose of increasing the receiving sensitivity and/or the reception range for the transmitter signal. If the frequency of the FOM signal then changes, an adjustable amplifier can be used as the amplifier 24, which adjustable amplifier may be of the same type as the amplifier 11 and whose gain factor is controlled in the same way from a memory.

It should be noted that the definition of "bandwidth" has not been established unambiguously, that it has changed with time, and that it will probably continue to change. According to the current PTT definition, the power of the emitted transmitter signal in a neighbouring channel must be attenuated by a particular number of dB's with regard to the power in the channel itself, with in addition an upper limit applying to the power in the neighbouring channel.

It should again be noted that where the claims and the description refer to amplification, this may also be understood as attenuation within the scope of the invention.

Furthermore, the transmitter input stage according to the invention is not restricted to the embodiments shown. As explained, for example, with reference to Figure 2 and, at the end of the explanation, with reference to Figure 3, the memory 12 may, after all, contain a large number of values for the gain factor of the adjustable amplifier 11 for each individual input signal or for each group of received input signals having various highest (permitted) frequencies.

## Claims

1. Input stage of a transmitter, comprising a combining circuit (1,1',1") having a plurality of inputs for receiving various input signals (i₁,...,i_{N}) having various maximum frequencies with significant amplitudes, the combining circuit (1,1',1") combining the input signals into a modulation signal (m) which is supplied to an output of the combining circuit which is intended to be connected to a frequency modulation stage (2) of the transmitter in order to arrange for the generation and transmission of a transmission signal having a bandwidth which is essentially smaller than, or equal to, a maximum permitted bandwidth, **characterised in that** the combining circuit (1,1',1") amplifies each of the input signals (i₁,...i_{N}) and/or a combined group of input signals (i₂,i₃), depending on their presence and on their highest frequency, in such a way that the bandwidth of the transmission signal is increased towards the maximum permitted bandwidth.

2. Input stage of a transmitter according to Claim 1, **characterised in that** the combining circuit (1') has an amplifier (11), with an adjustable gain factor, having inputs for receiving a single input signal (iₓ) or a combined group of input signals of said input signals (i₁,...,i_{N}), the combining circuit (1') has a memory (12) in which for each single input signal or group of input signals, respectively, to be amplified by the amplifier (11) a gain factor assigned thereto is stored which is read out and supplied to the amplifier (11) for the purpose of adjusting the gain factor upon reception by the amplifier (11) of the associated single input signal (iₓ) or the associated group of input signals, respectively.

3. Input stage of a transmitter according to Claim 1, **characterised in that** the combining circuit (1") has an amplifier (11), with an adjustable gain factor, having inputs for receiving a single input signal or a combined group of input signals of said input signals, the combining circuit (1") has a memory (12) in which for each single input signal (Sp,CD) or group of input signals, respectively, to be amplified by the amplifier (11) a gain factor assigned thereto is stored which is read out and supplied to the amplifier (11) for the purpose of adjusting the gain factor upon reception by the amplifier (11) of the associated single input signal or the associated group of input signals, respectively, and in which the input signals of the combining circuit (1") may comprise a code signal (CD), a frequency offset modulation signal (FOM), and a speech signal (Sp).

4. Input stage of a transmitter according to Claim 3, **characterised in that** different gain factors are assigned to code signals (CD) having different bit durations.

5. Input stage of a transmitter according to Claim 3, **characterised in that** different gain factors are assigned to different groups each comprising a code signal and a frequency offset modulation signal (FOM) in which said groups having different bit durations.

6. Input stage of a transmitter according to Claim 3, 4 or 5, **characterised in that** the frequency offset modulation signal (FOM) is amplified along a separate path with fixed gain, and in that the combining circuit (1") has a summator (25) which, at its inputs, receives an output signal of the amplifier (11) with adjustable gain factor and the amplified frequency offset modulation signal (FOM) and which, at one output, supplies the modulation signal.

7. Input stage of a transmitter according to one of Claims 3 to 6 inclusive, in which the system is suitable for supplying an indication (SE) which indicates that an input signal is a speech signal (Sp) and an indication (FD) which indicates that an input signal is a frequency offset modulation signal (FOM), whereby each of the gain factors is stored in a register assigned to the factor and the combining circuit (1") has a logical combinatorial circuit which receives the two indications (SE,FD) and, depending on the indications received, enables one of the registers for the purpose of supplying to the amplifier (11) with an adjustable gain factor the gain factor stored in the enabled register.

8. Input stage of a transmitter according to one of Claims 3 to 7 inclusive, **characterised by** one or more filters (22,23,26) between the inputs and the output of the combining circuit (1") for the purpose of limiting the frequencies of the input signals (Sp,CD,FOM) in the modulation signal (m) to essentially a highest frequency thereof.

9. Input stage of a transmitter according to Claim 8, **characterised in that** the highest frequency of the modulation signal (m) is essentially the highest permitted frequency of the speech signal (Sp).

## Patentansprüche

1. Eingangsstufe eines Senders, die eine Kombinationsschaltung (1, 1', 1") aufweist, die eine Vielzahl von Eingängen zum Empfang von verschiedenen Eingangssignalen (i₁, ... i_{N}) hat, welche verschiedene Maximalfrequenzen mit signifikanten Amplituden haben, wobei die Kombinationsschaltung (1, 1', 1") die Eingangssignale zu einem Modulationssignal (m) kombiniert, das einem Ausgang der Kombinationsschaltung zugeführt wird, der mit einer Frequenzmodulationsstufe (2) des Senders verbunden werden soll, um für die Erzeugung und Übertragung eines Sendesignals zu sorgen, das eine Bandbreite hat, die wesentlich kleiner als eine oder gleich einer maximal zulässigen Bandbreite ist,
dadurch gekennzeichnet,
daß die Kombinationsschaltung (1, 1', 1") jedes der Eingangssignale (i₁, ..., i_{N}) und/oder eine kombinierte Gruppe von Eingangssignalen (i₂, i₃) in Abhängigkeit von ihrer Anwesenheit und von ihrer höchsten Frequenz auf eine solche Weise verstärkt, daß die Bandbreite des Sendesignals in Richtung der maximal zulässigen Bandbreite vergrößert wird.

2. Eingangsstufe eines Senders nach Anspruch 1,
dadurch gekennzeichnet,
daß die Kombinationsschaltung (1') einen Verstärker (11) mit einem einstellbaren Verstärkungsfaktor hat, der Eingänge zum Empfang eines einzelnen Eingangssignals (iₓ) oder einer kombinierten Gruppe von Eingangssignalen der genannten Eingangssignale (i₁, ..., i_{N}) hat, wobei die Kombinationsschaltung (1') einen Speicher (12) hat, in dem für jedes einzelne Eingangssignal bzw. für jede Gruppe von Eingangssignalen, die von dem Verstärker (11) zu verstärken sind, ein zugeordneter Verstärkungsfaktor gespeichert ist, der ausgelesen und dem Verstärker (11) zu dem Zweck zugeführt wird, den Verstärkungsfaktor beim Empfang des zugeordneten einzelnen Eingangssignals (iₓ) bzw. der zugeordneten Gruppe von Eingangssignalen durch den Verstärker (11) einzustellen.

3. Eingangsstufe eines Senders nach Anspruch 1,
dadurch gekennzeichnet,
daß die Kombinationsschaltung (1") einen Verstärker (11) mit einem einstellbaren Verstärkungsfaktor hat, der Eingänge zum Empfang eines einzelnen Eingangssignals oder einer kombinierten Gruppe von Eingangssignalen der genannten Eingangssignale hat, wobei die Kombinationsschaltung (1") einen Speicher (12) hat, in dem für jedes einzelne Eingangssignal (Sp, CD) bzw. jede Gruppe von Eingangssignalen, die von dem Verstärker (11) zu verstärken sind, ein zugeordneter Verstärkungsfaktor gespeichert ist, der ausgelesen und dem Verstärker (11) zu dem Zweck zugeführt wird, den Verstärkungsfaktor beim Empfang des zugeordneten einzelnen Eingangssignals bzw. der zugeordneten Gruppe von Eingangssignalen durch den Verstärker (11) einzustellen, und wobei die Eingangssignale der Kombinationsschaltung (1") ein Codesignal (CD), ein Frequenzoffset-Modulationssignal (FOM) und ein Sprachsignal (Sp) aufweisen können.

4. Eingangsstufe eines Senders nach Anspruch 3,
dadurch gekennzeichnet,
daß unterschiedliche Verstärkungsfaktoren Codesignalen (CD) zugeordnet sind, die unterschiedliche Bitdauern haben.

5. Eingangsstufe eines Senders nach Anspruch 3,
dadurch gekennzeichnet,
daß unterschiedliche Verstärkungsfaktoren unterschiedlichen Gruppen zugeordnet sind, die jeweils ein Codesignal und ein Frequenzoffset-Modulationssignal (FOM) aufweisen, wobei die Gruppen unterschiedliche Bitdauern haben.

6. Eingangsstufe eines Senders nach Anspruch 3, 4 oder 5,
dadurch gekennzeichnet,
daß das Frequenzoffset-Modulationssignal (FOM) längs eines getrennten Pfades mit einem festgelegten Verstärkungsfaktor verstärkt wird und daß die Kombinationsschaltung (1") eine Summiereinrichtung (25) hat, die an ihren Eingängen ein Ausgangssignal des Verstärkers (11) mit einstellbarem Verstärkungsfaktor und das verstärkte Frequenzoffset-Modulationssignal (FOM) empfängt und an einem Ausgang das Modulationssignal abgibt.

7. Eingangsstufe eines Senders nach einem der Ansprüche 3 bis 6 einschließlich,
wobei das System geeignet ist, eine Anzeige (SE) zu liefern, die anzeigt, daß ein Eingangssignal ein Sprachsignal (Sp) ist, und eine Anzeige (FD) zu liefern, die anzeigt, daß ein Eingangssignal ein Frequenzoffset-Modulationssignal (FOM) ist, wobei jeder der Verstärkungsfaktoren in einem dem Faktor zugeordneten Register gespeichert ist, und wobei die Kombinationsschaltung (1") eine Logik-Kombinationsschaltung aufweist, die die beiden Anzeigen (SE, FD) empfängt und in Abhängigkeit von den empfangenen Anzeigen eines der Register zu dem Zweck aktiviert, dem Verstärker (11) einen einstellbaren Verstärkungsfaktor der in dem aktivierten Register gespeicherten Verstärkungsfaktoren zuzuführen.

8. Eingangsstufe eines Senders nach einem der Ansprüche 3 bis 7 einschließlich,
gekennzeichnet durch ein oder mehr Filter (22, 23, 26) zwischen den Eingängen und dem Ausgang der Kombinationsschaltung (1") zu dem Zweck der Begrenzung der Frequenzen der Eingangssignale (Sp, CD, FOM) in dem Modulationssignal (m) auf im wesentlichen eine Höchstfrequenz davon.

9. Eingangsstufe eines Senders nach Anspruch 8,
dadurch gekennzeichnet,
daß die Höchstfrequenz des Modulationssignals (m) im wesentlichen die höchste zulässige Frequenz des Sprachsignals (Sp) ist.

## Revendications

1. Etage d'entrée d'un émetteur, comprenant un circuit mélangeur (1, 1', 1") présentant une pluralité d'entrées destinées à recevoir divers signaux d'entrée (i₁, ..., i_{N}) présentant diverses fréquences maximales avec des amplitudes significatives, le circuit mélangeur (1, 1', 1") mélangeant les signaux d'entrée en un signal de modulation (m) qui est produit à une sortie du circuit mélangeur qui doit être raccordée à un étage de modulation de fréquence (2) de l'émetteur de manière à permettre la génération et l'émission d'un signal d'émission présentant une largeur de bande qui est essentiellement inférieure ou égale à une largeur de bande autorisée maximale, caractérisé en ce que le circuit mélangeur (1, 1', 1") amplifie chacun des signaux d'entrée (i₁, ..., i_{N}) et/ou un groupe mélangé de signaux d'entrée (i₂, i₃), en fonction de leur présence et de leur fréquence la plus élevée, de sorte que la largeur de bande du signal d'émission est augmentée relativement à la largeur de bande autorisée maximale.

2. Etage d'entrée d'un émetteur selon la revendication 1, caractérisé en ce que le circuit mélangeur (1') est doté d'un amplificateur (11), avec un facteur de gain réglable, doté d'entrées destinées à recevoir un signal d'entrée unique (iₓ) ou un groupe mélangé de signaux d'entrée desdits signaux d'entrée (i₁, ..., i_{N}), le circuit mélangeur (1') est doté d'une mémoire (12) dans laquelle pour chaque signal d'entrée unique ou groupe de signaux d'entrée, respectivement, devant être amplifié par l'amplificateur (11) un facteur qui lui est affecté est enregistré, lequel facteur de gain est extrait et appliqué à l'amplificateur (11) dans le but de régler le facteur de gain lors de la réception par l'amplificateur (11) du signal d'entrée unique associé (iₓ) ou du groupe associé de signaux d'entrée, respectivement.

3. Etage d'entrée d'un émetteur selon la revendication 1, caractérisé en ce que le circuit mélangeur (1") est doté d'un amplificateur (11), avec un facteur de gain réglable, présentant des entrées destinées à recevoir un signal d'entrée unique ou un groupe mélangé de signaux d'entrée desdits signaux d'entrée, le circuit mélangeur (1") est doté d'une mémoire (12) dans laquelle pour chaque signal d'entrée (SP, CD) ou groupe de signaux d'entrée, respectivement, devant être amplifié par l'amplificateur (11) un facteur de gain qui lui est affecté est enregistré lequel facteur de gain est extrait et appliqué à l'amplificateur (11) afin de régler le facteur de gain lors de la réception par l'amplificateur (11) du signal d'entrée unique associé ou du groupe associé de signaux d'entrée, respectivement, et dans lequel les signaux d'entrée du circuit mélangeur (1") peuvent comporter un signal de code (CD), un signal de modulation d'écart de fréquence (FOM) et un signal vocal (SP).

4. Etage d'entrée d'un émetteur selon la revendication 3, caractérisé en ce que différents facteurs de gain sont affectés aux signaux de code (CD) présentant des durées binaires différentes.

5. Etage d'entrée d'un émetteur selon la revendication 3, caractérisé en ce que différents facteurs de gain sont affectés à différents groupes chacun comportant un signal de code et un signal de modulation d'écart de fréquence (FOM) dans lequel lesdits groupes ont des durées binaires différentes.

6. Etage d'entrée d'un émetteur selon les revendications 3, 4 ou 5, caractérisé en ce que le signal de modulation d'écart de fréquence (FOM) est amplifié selon un parcours distinct à gain fixe, et en ce que le circuit mélangeur (1") a un sommateur (25) qui, sur ses entrées, reçoit un signal de sortie de l'amplificateur (11) avec un facteur de gain réglable et le signal de modulation d'écart de fréquence (FOM) amplifié et qui, sur une sortie, fournit le signal de modulation.

7. Etage d'entrée d'un émetteur selon une des revendications 3 à 6 incluse, dans lequel le système est adapté à la production d'une indication (SE) qui indique qu'un signal d'entrée est un signal vocal (SP) et une indication (FD) qui indique qu'un signal d'entrée est un signal de modulation d'écart de fréquence (FOM), ce par quoi chacun des facteurs de gain est enregistré dans un registre affecté au facteur et le circuit mélangeur (1") est muni d'un circuit combinatoire logique qui reçoit les deux indications (SE, FD) et, en fonction des indications reçues, active un des registres dans le but de fournir à l'amplificateur (11) un facteur de gain réglable, le facteur de gain étant enregistré dans le registre activé.

8. Etage d'entrée d'un émetteur selon une des revendications 3 à 7 incluse, caractérisé par un ou plusieurs filtres (22, 23, 26) entre les entrées et la sortie du circuit mélangeur (1") servant à limiter les fréquences des signaux d'entrée (SP, CD, FOM) dans le signal de modulation (m) essentiellement à une fréquence la plus élevée.

9. Etage d'entrée d'un émetteur selon la revendication 8, caractérisé en ce que la fréquence la plus élevée du signal e modulation (m) est essentiellement la fréquence la plus élevée autorisée du signal vocal (SP).
